# EUROPÄISCHE PATENTANMELDUNG

(11) **EP 2 133 661 A1**
(43) Veröffentlichungstag der Anmeldung: **16.12.2009**
(21) Anmeldenummer: 08157854.4
(22) Anmeldetag: 09.06.2008
(51) Int. Cl.: G01B 13/12, G01B 13/14

(54) **Messverfahren zum Messen einer Distanz von einer Basisfläche zu einer sich verjüngenden Fläche eines Körpers**

(71) Anmelder: Marposs AG, 3122 Kehrsatz (CH)
(72) Erfinder: Egger, Hans, 3174, Thörishaus (CH); Tschannen, Werner, 3202, Frauenkappelen (CH)
(74) Vertreter: BOVARD AG

(57) **Zusammenfassung**

Ein Messverfahren zum Messen einer Distanz von einer Basisfläche (5) zu einem Querschnitt mit einem vorgegebenen Durchmesser (A) einer eine Erhebung oder Vertiefung bildenden, sich verjüngenden Fläche (1.1) mit kreisförmiger Querschnittsform eines Körpers (1) wird so ausgeführt, dass ein Messkörper (3) mit einem Durchmesser (A) aufweist, auf der Basisfläche (5) angeordnet wird. Zwischen der Querschnittfläche mit dem Durchmesser (A) und dem Messkörper (3) wird ein Spalt (6) gebildet, mittels einer Druckmesseinheit (7) wird ein fluides Medium durch den Spalt (6) gepresst und der Druck des fluiden Mediums wird gemessen. Der gemessene Druck lässt auf die Distanz schliessen.

## Beschreibung

Die vorliegende Erfindung bezieht sich auf ein Messverfahren zum Messen einer Distanz von einer Basisfläche zu einem Querschnitt mit einem vorgegebenen Durchmesser einer eine Erhebung oder Vertiefung bildenden, sich verjüngenden Fläche mit kreisförmiger Querschnittsform eines Körpers. Ferner bezieht sich die Erfindung auf ein Messsystem zur Durchführung dieses Verfahrens.

Im Stand der Technik sind Werkstücke bekannt, die in der Oberfläche eine Ansenkung mit unterschiedlichen Formen und einer präzisen Tiefe aufweisen. Es können auch Ansenkungen sein, die mit oder ohne Durchgangsbohrungen ausgestattet sind. Weiter können derartige Werkstücke auch eine nach aussen gerichtete konus- oder kugelförmige Form aufweisen. Die entsprechend bearbeitete Oberfläche dieser Körper muss sehr genau sein, so werden beispielsweise derartige Körper, deren bearbeitete Flächen eine Ansenkung ist, die in eine durchgehende Bohrung mündet, als Dichtfläche verwendet werden, wie sie in verschiedensten Einsatzbereichen benutzt werden. Damit der Konus oder die Kugel, der bzw. die in die Ansenkung eingesetzt werden, mit einem definierten Abstand zur Basisfläche dichten kann, ist eine genaue Bearbeitung der Fläche der Ansenkung erforderlich und eine entsprechende Kontrolle notwendig. Diese Kontrolle besteht aus einer genauen Tiefenmessung der Ansenkung.

Es ist deshalb insbesondere notwendig, Parameter der Ansenktiefe, die irgendeine Form aufweisen kann, schnell und sehr präzise zu messen. Dabei soll der Wartungsaufwand für die Messeinrichtung vernachlässigbar klein sein.

Das Messen von festgelegten Tiefenabmessungen bei Ansenkungen ist im Stand der Technik bekannt und wird bereits in der metallverarbeitenden Industrie eingesetzt. So wird beispielsweise mittels eines mechanischen Messverfahrens zum Bestimmen der Senktiefe beispielsweise eines Ventilsitzes ein Eichnormal mit einer definierten Basis in die Ansenkung gelegt und die Distanz zu einer definierten Basisfläche gemessen. Der Nachteil besteht darin, dass bei verschmutzter Oberfläche die Messung nicht genau ist. Auch kann durch zu starkes Einlegen des Eichnormals die Ansenkung und/oder das Eichnormal beschädigt werden. Zudem werden durch dieses Messverfahren Formfehler, welche die Ansenkungen und die Eichnormale aufweisen können, nicht berücksichtigt.

Die Aufgabe der vorliegenden Erfindung besteht somit darin, ein neues Messverfahren zum Messen einer Distanz von einer Basisfläche zu einem Querschnitt einer eine Erhebung oder Vertiefung bildenden, sich verjüngenden Fläche mit kreisförmiger Querschnittsform eines Körpers, wobei der Querschnitt einen vorgegebenen Durchmesser aufweist, zu schaffen, mit welchem die Nachteile des oben beschriebenen Standes der Technik ausgeräumt werden können. Das neue Messverfahren soll insbesondere bewirken, dass die Ausmessung der sich verjüngenden Fläche schnell und sehr präzise durchgeführt werden kann, wobei der Wartungsaufwand für die Messeinrichtung vernachlässigbar klein gehalten werden soll.

Erfindungsgemäss erfolgt die Lösung dieser Aufgabe dadurch, dass ein Messkörper mit einem Durchmesser auf der Basisfläche angeordnet wird, derart, dass zwischen der Querschnittfläche mit dem Durchmesser des Körpers und dem Messkörper ein Spalt gebildet wird, und dass mittels einer Druckmesseinheit ein fluides Medium durch den Spalt gepresst wird und der Druck des fluiden Mediums gemessen wird.

Eine weitere Aufgabe der Erfindung besteht darin, ein Messsystem zur Durchführung dieses Verfahrens zu schaffen, was erfindungsgemäss dadurch gelöst wird, dass dieses eine Druckmesseinheit zur Messung des Drucks des zugeführten Gases und/oder der zugeführten Flüssigkeit zu einem Spalt zwischen einer sich verjüngenden Fläche eines Körpers und einem Messkörper umfasst.

Insbesondere werden diese Ziele durch die Erfindung dadurch erreicht, dass ein Messkörper relativ zu einer Basisfläche so angeordnet wird dass zwischen dem Messkörpers und der defginierten Querschnittfläche ein definierter Abstand in Form eines Spaltes entsteht. Mittels einer Druckmessvorrichtung wird ein gasförmiges- und/oder flüssiges Medium mit einem definierten Druck durch den Ringspalt geleitet. Die Druckabweichung, die dabei gemessen wird, ist proportional zum Ringspalt zwischen dem Messkörper und der Senkung. Ein solches Verfahren hat insbesondere den Vorteil, dass die Ausmessung der sich verjüngenden Fläche schnell und sehr präzise durchgeführt werden kann. Durch diese Art der Messung werden zudem Beschädigungen an der sich verjüngenden Fläche ausgeschlossen. Gegenüber einem mechanischen Messverfahren können allfällige einsatzrelevante Funktionen der sich verjüngenden Fläche berücksichtigt werden, wie sie beim Betrieb einer fertig montierten Einheit auftreten. Das Messverfahren kann zudem in einer normalen Produktionsumgebung eingesetzt werden, wobei eine Produktionssteigerung infolge gesenkter Taktzeiten erzielt wird. Mit dieser Art des Messverfahrens kann ein hoher Automatisierungsgrad und eine hohe Qualität der Messung gewährleistet werden. Die mit dem Messverfahren geprüften Teile müssen zudem vorgängig keine Reinigung und/oder Trocknung durchlaufen.

In vorteilhafter Weise wird mittels der Druckmessvorrichtung Luft durch den Spalt geleitet. Ein solches Verfahren hat insbesondere den Vorteil, dass das Messverfahren unter atmosphärischen Bedingungen durchgeführt werden kann.

Eine weitere vorteilhafte Ausgestaltung der Erfindung besteht darin, dass mittels einer Auswertevorrichtung aufgrund der Druckmessung ein Distanzwert und/oder ein Durchflusswert berechnet wird. Dadurch kann rasch überprüft werden, ob ein Distanzwert und/oder ein Durchflusswert der sich verjüngenden Fläche innerhalb eines Toleranzbereichs, an der Grenze zu einem Toleranzbereich oder ausserhalb eines Toleranzbereichs liegt.

In einer anderen Ausführungsvariante werden der Distanzwert und/oder der Durchflusswert bestimmt aufgrund einer Mappingvorrichtung mit einer abgespeicherten Tabelle für das Mapping zwischen einem Druck und einem Distanzwert und/oder aufgrund einer Mappingvorrichtung mit einer abgespeicherten Tabelle für das Mapping zwischen einem Druck und einem Durchflusswert. Ein solches Verfahren hat insbesondere den Vorteil, dass eine Mappingvorrichtung mit einer abgespeicherten Tabelle in einfacher Weise hergestellt und kalibriert werden kann.

Nachfolgend wird das erfindungsgemässe Verfahren mit Bezugnahme auf die in der beiliegenden Zeichnung dargestellten Ausführungsvarianten beispielhaft näher erläutert.

Es zeigt
Figur 1 eine Anordnung für ein Messverfahren gemäss dem Stand der Technik.
Figur 2 eine Anordnung für die Durchführung eines erfindungsgemässen Messverfahrens.
Figur 3 eine weitere Anordnung für die Durchführung eines erfindungsgemässen Messverfahrens.

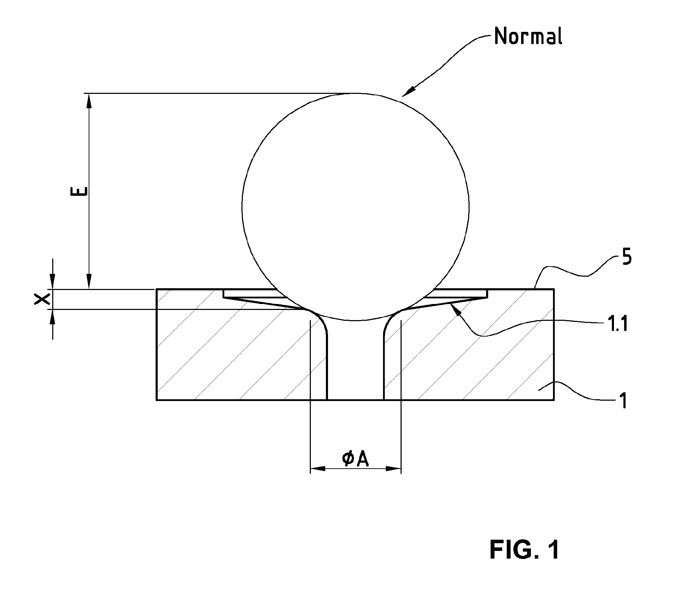

In Figur 1 bezieht sich das Bezugszeichen 1 auf einen Körper und das Bezugszeichen 1.1 auf eine sich verjüngende Fläche, die als Ansenkung ausgebildet ist. Diese Art von Ansenkungen wird z.B. in den Bereichen der Verbrennungsmotoren, insbesondere für Ventilsitze, bei Fluidikelementen, im Medizinalbereich oder anderen Vorrichtungen eingesetzt. Um die Effizienz solcher Ansenkungen mit oder ohne Durchlass zu gewährleisten, müssen insbesondere Parameter der Ansenkung sehr genau hergestellt sein. Für die Messung solcher Parameter ist im Stand der Technik das gemäss Figur 1 dargestellte Messverfahren bekannt. Bei diesem Messverfahren wird ein Eichnormal in die Senkung gelegt. Je nach Messverfahren kann ein solches Normal beispielsweise im Wesentlichen, wie in Figur 1 skizziert, eine Kugel sein oder von irgendeiner anderen Form sein. Nachdem das Eichnormal in der Ansenkung 1.1 angeordnet ist, kann die Länge E zwischen einem Referenzdurchmesser A des Eichnormals und einer Basis 5 bestimmt werden. Aufgrund der Messung der Länge E kann überprüft werden, ob eine Länge X, welche beispielsweise die Ansenktiefe bezeichnet, innerhalb eines vorgegebenen Toleranzbereichs liegt. Es ist ersichtlich, dass beispielsweise Verschmutzungen an der Kugel und/oder an den Ansenkungen falsche Messergebnisse liefern.

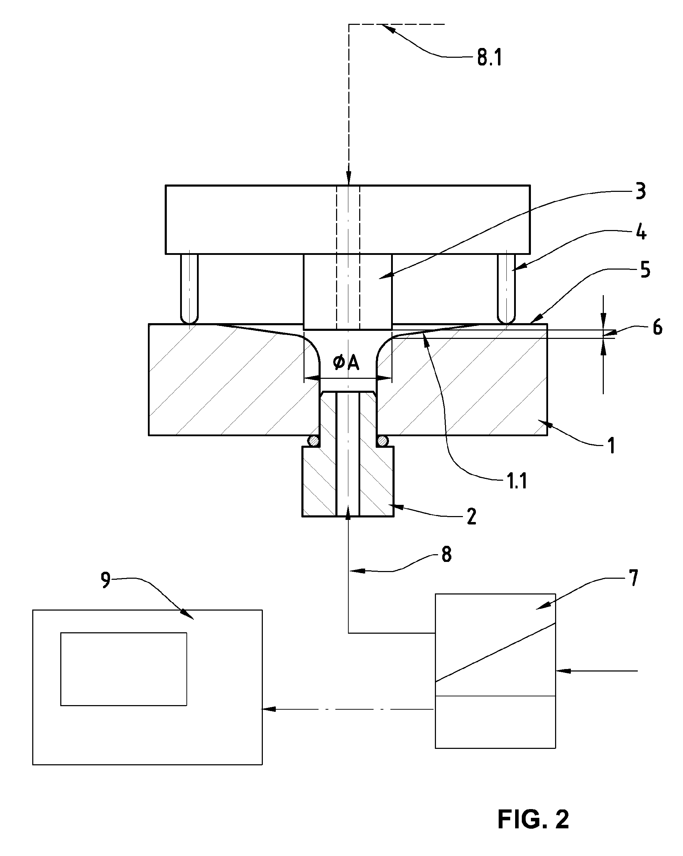

In Figur 2 ist ein erfindungsgemässes Messsystem dargestellt, mit welchem sich das erfindungsgemässe Messverfahren durchführen lässt. Gleiche Elemente sind mit denselben Bezugszeichen versehen wie die erwähnten Elemente in der bekannten Ausführungsform gemäss Fig. 1. In dem in Figur 2 dargestellten erfindungsgemässen Messverfahren wird ein Messkörper 3 mit einem Durchmesser A relativ zur Auflage 5 des Körpers 1 angeordnet. Wie in Figur 2 dargestellt ist, kann der Messkörper 3 beispielsweise mittels der Stützpunkte 4 auf der Auflage 5 angeordnet sein. Dem Fachmann sind verschiedenste Ausführungsvarianten bekannt, um eine relative Anordnung des Messkörpers 3 gegenüber einer Auflage 5 des Körpers 1 zu gewährleisten. Je nach Messverfahren kann sich die relative Anordnung statt auf die Auflage 5 auf irgendeine andere Referenz des Körpers 1 oder der Ansenkung 1.1 beziehen. Der Messkörper 3 ist so eingerichtet, dass bei der relativen Anordnung zu irgendeiner der erwähnten Referenzen zwischen dem Messkörper 3 und der Ansenkung 1.1 mit dem Querschnitt mit dem Durchmesser A ein Spalt 6 besteht. Der Messkörper 3 kann beispielsweise aus einem Zylinder bestehen, der Spalt 6 ist somit ein ringförmiger Spalt. Damit ein gleichmässiger ringförmiger Spalt entsteht, ist die Achse des Messkörpers 3 identisch zur Achse der Ansenkung angeordnet.

In Figur 2 bezieht sich das Bezugszeichen 7 auf eine Druckmesseinheit. Die Druckmesseinheit 7 kann eingerichtet sein, um ein Gas, insbesondere Luft, und/oder eine Flüssigkeit mit einem bestimmten Druck einer Leitung 8 zuzuführen. Wie in Figur 2 skizziert ist, kann das Gas und /oder Flüssigkeit durch die Leitung 8 oder alternativ durch die Leitung 8.1 zugeführt werden. Im Fall der Verwendung von Leitung 8.1 ist die Werkstückaufnahme 2, auf die der auszumessende Körper 1 aufgesetzt werden kann, ohne Bohrung ausgebildet, d.h. die durchgehende Ansenkung ist dicht verschlossen. Wichtig ist, dass das Gas und/oder die Flüssigkeit durch den Spalt 6 abgeführt werden.

Wie in Figur 2 skizziert ist, kann alternativ anstelle der Druckmesseinheit 7 eine Durchflussmesseinheit vorgesehen sein oder es kann eine Kombination mit einer Druck- und einer Durchflussmesseinheit vorgesehen sein.

Wie in Figur 2 dargestellt ist, ist eine Auswertevorrichtung 9 vorgesehen. Die Auswertevorrichtung 9 ist eingerichtet, um einen Druckmesswert oder einen Durchflussmesswert einem Distanzwert und/oder einem Durchfluss zuzuordnen. So kann beispielsweise die Auswertevorrichtung 9 Mittel umfassen, um einen gemessenen Druckwert einer Abweichung der Senktiefe zu einer vorgängigen Einstellung mittels Messnormalen anzuzeigen. Dabei kann als Messnormale ein Basiskörper mit einer Ansenkung verwendet werden, welche exakt die gewünschte Geometrie hat. Es können auch beispielsweise drei Messnormale verwendet werden, eine erste Messnormale für einen oberen Toleranzbereich, eine zweite Messnormale für einen mittleren Toleranzbereich und eine dritte Messnormale für einen unteren Toleranzbereich. Die Auswertevorrichtung 9 kann dabei Mittel umfassen, um eine Druckmessung einem solchen Toleranzbereich zuzuordnen.

Als Druckmesseinheiten 7 können insbesondere handelsübliche Vorrichtungen, wie z.B. pneumatische Messwandler Marposs Typ MRT oder LVDT verwendet werden.

Die Auswerteeinheit kann insbesondere eine mikroprozessorbasierte, elektronische Einheit umfassen, mit einem Analog/Digital Wandler zum Wandeln eines elektrischen Signals, welches dem Messwandler entspricht, mit einem programmierbaren Prozessor zum Abarbeiten von Programmcode, mit einer Anzeige zur Darstellung der berechneten Werte und mit Eingabemitteln zur Steuerung oder Modifikation des Herstellungsprozess. Eine solche mikroprozessorbasierte Vorrichtung kann zudem ein Mappingsystem enthalten, mit welchem nichtlineare Werte des Luftspalts in einer linearen Skala in Mikrometer so dargestellt werden, dass diese mit mechanischen Eichnormalen nachgeprüft werden können.

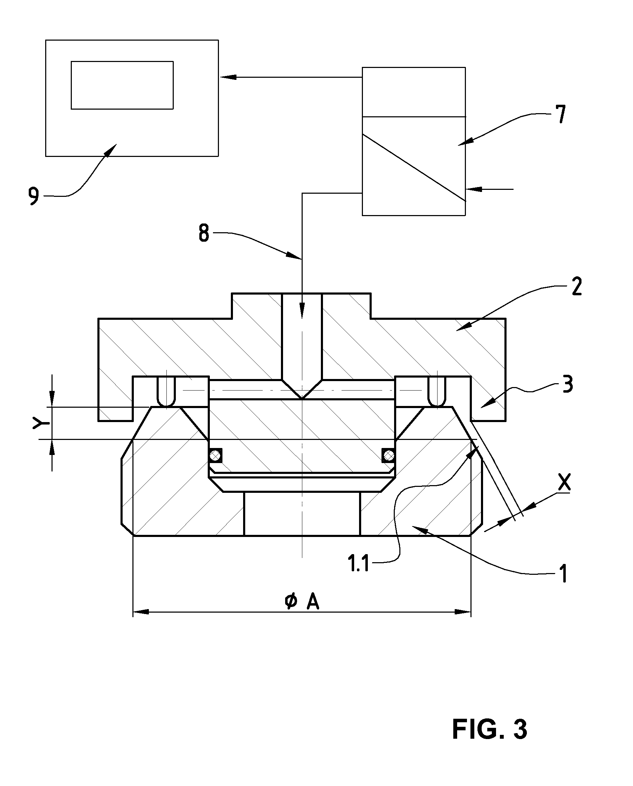

In Figur 3 ist eine Anordnung zur Durchführung des erfindungsgemässen Messverfahrens im Falle eines aussenliegenden Konus skizziert, wobei gleiche Elemente mit denselben Bezugszeichen bezeichnet sind, wie die entsprechenden Elemente des vorgängig beschriebenen Ausführungsbeispiels. Wie in Figur 3 skizziert ist, kann eine Zentriereinheit 2 und ein Messkörper 3 aus einem Körper so gebildet sein, das ein Spalt X zwischen dem Messkörper 3 und einem Konus 1.1 des Körpers 1 besteht, und wobei mittels einer Druckmesseinheit 7 und entsprechenden Durchführungen eines Gases und/oder einer Flüssigkeit durch den Spalt 6 ein Druck gemessen wird. Alternativ kann wiederum statt einer Druckmessung eine Durchflussmessung durchgeführt werden.

## Patentansprüche

1. Messverfahren zum Messen einer Distanz von einer Basisfläche (5) zu einem Querschnitt mit einem vorgegebenen Durchmesser (A) einer eine Erhebung oder Vertiefung bildenden, sich verjüngenden Fläche (1.1) mit kreisförmiger Querschnittsform eines Körpers (1), **dadurch gekennzeichnet, dass** ein Messkörper (3) mit einem Durchmesser (A) auf der Basisfläche (5) angeordnet wird, derart, dass zwischen der Querschnittfläche mit dem Durchmesser (A) des Körpers (1) und dem Messkörper (3) ein Spalt (6, X) gebildet wird, und dass mittels einer Druckmesseinheit ein fluides Medium durch den Spalt (6, X) gepresst wird und der Druck des fluiden Mediums gemessen wird.

2. Messverfahren nach Anspruch 1, **dadurch gekennzeichnet, dass** mittels der Druckmesseinheit (7) Luft durch den Spalt (6) geleitet wird.

3. Messverfahren nach einem der Ansprüche 1 bis 2, **dadurch gekennzeichnet, dass** mittels einer Auswertevorrichtung (9) aufgrund der Messung des Drucks ein Distanzwert und/oder ein Durchflusswert bestimmt werden.

4. Messverfahren nach Anspruch 3, **dadurch gekennzeichnet, dass** der Distanzwert und/oder der Durchflusswert bestimmt werden aufgrund einer Mappingvorrichtung mit einer abgespeicherten Tabelle für das Mapping zwischen einem Druck und einem Distanzwert und/oder aufgrund einer Mappingvorrichtung mit einer abgespeicherten Tabelle für das Mapping zwischen einem Druck und einem Durchflusswert.

5. Messsystem zur Durchführung des Verfahrens nach einem der Ansprüche 1 bis 4, umfassend eine Druckmesseinheit (7) zur Messung des Drucks des zugeführten Gas und/oder der zugeführten Flüssigkeit zu einem Spalt (6) zwischen einer Senkung (1.1) einer Basis (1) und einem Messkörper (3).
